# EUROPEAN PATENT APPLICATION

(11) **EP 1 006 687 A1**
(43) Date of publication of application: **07.06.2000**
(21) Application number: 98937396.4
(22) Date of filing: 04.08.1998
(51) Int. Cl.: H04J 13/02, H04J 13/04

(54) **SPREAD SPECTRUM ADDRESS CODING**

(30) Priority: 12.08.1997 CN 97116324
(71) Applicant: Li, Daoben, Beijing 100876 (CN)
(72) Inventor: Li, Daoben, Beijing 100876 (CN)
(74) Representative: Cross, Rupert Edward Blount
(86) International application number: CN9800151
(87) International publication number: WO9909692

(57) **Abstract**

This invention publishes a spread spectrum multiple access coding technique applied in any wireless digital telecommunication system involving Code Division Multiple Access and spread spectrum technique. The group of basic pulses has normalized amplitudes and duration of 1 and polarity; the number of basic pulses is ascertained by practical factors; there is no equal interval between basic pulses on time axis, and asymmetry of pulses' positions is employed to achieve arranging coding. This coding scheme can control and minimize the side lobes of auto-correlation and cross-correlation functions, then simplify the design of a CDMA system, so a wireless digital telecommunication system with large capacity can be established effectively to solve the contradiction between ever increasing demand for telecommunication capacity and limited frequency resources.

## Description

### Field of the Invention:

The invention relates to a spread spectrum and digital multiple access wireless communications scheme, especially to a spread spectrum multiple access coding scheme applied in any digital communications system employing code division multiple access ("CDMA") and spread spectrum radio.

### Background of the invention:

With the corning of the information society and the personal communications era, people's demand on wireless communications technology is growing rapidly, but the frequency resources are very limited. A code division multiple access ("CDMA") technique is the only efficient way to solve the contradiction between limited frequency resources and demand for high capacity. The capacity of traditional wireless multiple access techniques, e.g., frequency division multiple access ("FDMA") and time division multiple access ("TDMA"), is fixed once designed, i.e., additional users can't be introduced beyond that capacity limit. But CDMA is different in that the capacity is only limited by the interference level and thus results in the advantages of large capacity and soft capacity. That is, introducing an additional user is not rejected, only leading to reduce signal to noise ratio and quality of communications. So, unlike FDMA or TDMA, an insurmountable capacity limit does not exist.

As is noted above, the capacity of a CDMA system is interference-limited, thus, whether the interference level can be controlled or not determines the system's quality. Generally, the interference in the system consists of four parts: the first is local noise, which is irreducible unless applying a low noise amplifier; the second is multiple access interference ("MAI"), which comes from the other users in the system; the third is inter-code or inter-symbol interference ("ISI"); and the fourth is neighboring cell or adjacent channel interference (ACI). By employing well-designed multiple access codes, MAI, ISI and ACI can be reduced or even eliminated.

In any CDMA system, each user has a specific spread spectrum multiple access code for identification. Furthermore, to reduce the users mutual interference, the spread spectrum multiple access codes must be orthogonal to each other. Indeed, orthogonality between any two users' signals is always required in any multiple access system. Given that the channel is an ideal linear time-invariant system, and accurate synchronization is realized in the system, then orthogonality between any two users' signals can be achieved. Unfortunately, there is no such ideal channel in practice. Besides, it is quite difficult to maintain strict synchronization. That is why it is important to employ a good multiple access technique. As for a CDMA technique, the well designed multiple accress codes are the root of the system.

As it is known that the wireless channel is a typical random time-varying channel, in which there exists not only random frequency dispersion (Doppler frequency shift) but also random time dispersion (multi-path propagation). The former introduces time selective fading to the received signals, i.e., the received signal's frequency varies randomly with time. The latter introduces frequency selective fading to the received signals, i.e. different frequency spectrum components of the received signal vary differently with time. The fading deteriorates the system's performance seriously and at the same time, reduces the system's capacity. This is especially true for the channel's time dispersion, which is caused by multi-path propagation: it prevents signals from arriving simultaneously, so ISI (inter-symbol interference) and MAI (multiple access interference) are caused and the system's capacity is drastically reduced. When the relative time delay between signals is zero, it's quite easy to achieve orthogonality between signals, indeed any orthogonal codes can meet that requirement, but when the relative delay between signals is non-zero, it becomes very difficult to do so. In fact, it has been proven that there are no such spread spectrum multiple access codes in binary, finite and even complex number spaces. In particular, MAI and ISI contradict one another so that smaller MAI leads to larger ISI and vice versa.

Therefore, the distinction between different CDMA systems lies mainly in the selected multiple access codes, i.e. in a good system, ISI and MAI must both be small, otherwise they must be larger.

At present, there are already some patents in effect, e.g. those of Qualcomm, Interdigital, Cylink, European Nokia, etc. However, the CDMA systems mentioned above either have very low efficiency such as Nokia's, whose capacity is even smaller than a TDMA's; or have very short communications distance such as Cylink's, whose communications distance is only within several hundred meters or so; or can do nothing to MAI and ISI, such as Qualcomm's and Interdigital's, for which, all that can be done is to alleviate them by using relatively good multiple access codes.

### Summary of the invention:

The aim of the invention is to present a new, simpler, clearer and faster design scheme of spread spectrum multiple access codes. Based on the scheme, both MAI and ISI in the corresponding CDMA system can be controlled to their minimal values and thus a digital wireless communications system with large capacity can be constructed.

Ideal spread spectrum multiple access codes should satisfy the two main conditions below:
First, each code's auto-correlation function should be an ideal impulse function. i.e. the function should be zero everywhere except at the origin. From the view of orthogonality, each code should be orthogonal to its own relative time delay version unless the relative time delay is zero;
Second, the cross-correlation function between any two codes should be zero everywhere. From the view of orthogonality, each code should be orthogonal to all the other codes with any relative time delay (including the zero delay).

To elaborate, we denote the auto-correlation values at the origin as the main-lobe value, while the auto-correlation values not at the origin, as well as the cross-correlation values are denoted as side-lobe values. For an ideal CDMA system, the side-lobe values of all the auto-correlations and cross-correlations should be zero. For a practical system, however, it is impossible to satisfy that condition. In this case, all that can be done is to try to make the values of the side-lobes as small as possible (or the main-lobe to side-lobe value ratio as large as possible) and the number of the side-lobes as few as possible. As for binary codes, the smallest non-zero side-lobe's value must be +1 or -1.

Therefore, the goal of the invention is to present a spread spectrum multiple access coding scheme that controls the side-lobes' values of the auto-correlations and cross-correlations and makes them minimal.

In addition, a random access asynchronous communications system in which all the user stations' clocks are not controlled by base station is much welcomed because of its simplicity. That system, on the other hand, has a very strict requirement on the spread spectrum multiple access codes' characteristic. So another goal of the invention is to give an effective and practical method for such a random access asynchronous digital communications system.

To reach the above goals, the spread spectrum multiple access codes mentioned here is composed of basic pulses with normalized "1" amplitude and width and different polarities. The number of the basic pulses is determined according to such practical factors as the number of required users, the number of available pulse compressing codes, the number of available orthogonal pulse compressing codes, the number of available orthogonal frequencies, system bandwidth, the system's highest transmission rate, etc. The intervals between the basic pulses on the time axis are all unequal and the basic pulses' positions on it are all different, which are both considered together with the basic pulses' polarities when coding.

Of all the values of the basic pulses' intervals mentioned above, only one is an odd number larger than the smallest interval's value, i.e. the coding length is odd, while the rest intervals' values are all even. Moreover, any interval's value can not be the sum of any other two or more interval values.

According to orthogonality, the spread spectrum multiple access codes mentioned above are sorted into different code groups, in which the polarities of the basic pulses are determined by the orthogonality requirement and the sequence is sorted according to Hadamard or other orthogonal matrices, or some kind of bi-orthogonal or trans-orthogonal matrix.

The above coding method is a new CDMA spread spectrum multiple access coding scheme for a Large Area Asynchronous Wireless Communications System or Large Area Synchronous Wireless Communications System, and the code groups are named LA-CDMA codes. When doing correlation, whether it is auto-correlation or cross-correlation, and whether it is periodic correlation, or non-periodic correlation, or even mixed correlation, no two or more basic pulses can meet together besides at the origin, which ensures that the side-lobes' values are at most +1 or -1. Furthermore, there exists a zero correlation window beside the origin and the main-lobe's value equals the number of basic pulses. Therefore, the objective is reached to control the side-lobes of the auto-correlations and cross-correlations and reduce them to a minimum. That is, in the corresponding CDMA system, both MAI and ISI are controlled to minimum, and an ideal CDMA system without MAI and ISI can also be realized if the zero correlation window is utilized.

The above gives a new simpler, clearer and faster design scheme of spread spectrum multiple access codes for spread spectrum technology and digital multiple access technology. Based on the scheme, a CDMA system's design can be simplified and large capacity achieved, so as to solve the contradiction between the growing need for high capacity and the limited frequency resources.

Because the side-lobes of the correlations are small and smooth, MAI and ISI are unrelated to the users' access time and thus random access is permitted. Further, as long as the stability of the clocks in the user stations' transceivers meets a specific requirement, an asynchronous mode is also permitted.

In a practical design, to increase the code's duty ratio, the above mentioned basic pulse can also be formed by pulse compressing codes, which are composed of one or more binary or m-ary sequences, including frequency modulated sequences, or frequency and phase jointly modulated sequences, or frequency, phase and time jointly modulated sequences, etc.

In order to raise the transmission data rare or reduce frequency band-width, or increase the number of multiple access codes number, the codes can also be time offset and overlapped, where the shift interval should be larger than the channel's maximum time dispersion (the maximum multi-path time delay difference). In the case that the shift interval is smaller than the channel's maximum time dispersion, the shifted version should be modulated by different orthogonal frequencies.

In order to raise the code's duty ratio and transmission data rate simultaneously as much as possible, both of the above methods can be combined, i.e. the basic pulse is composed of pulse compressing codes (including one or more binary or m-ary sequences, or frequency modulated sequences, or frequency and phase jointly modulated sequences, or frequency, phase and time jointly modulated sequences, etc.). At the same time, the codes are time offset and overlapped.

To further increase the number of multiple access codes, the above mentioned basic pulse can also be formed by orthogonal pulse compressing codes (including one or more binary or m-ary sequences, or frequency modulated sequences, or frequency and phase jointly modulated sequences, or frequency, phase and time jointly modulated sequences, etc), or the above mentioned basic pulses can be modulated by different orthogonal frequencies.

### Brief description of the attached drawings:

**Figure 1** illustrates an example of LA-CDMA code groups (with 16 codes) mentioned in the paper.
**Figure 2** is an illustration of the non-periodic auto-correlation function mentioned in the paper (for code 1 in figure 1).
**Figure 3** is an illustration of the non-periodic auto-correlation function mentioned in the paper (for code 2 in figure 1).
**Figure 4** is an illustration of the non-periodic cross-correlation function mentioned in the paper (for code 1 and code 2 in figure 1).
**Figure 5** is an illustration of the non-periodic cross-correlation function mentioned in the paper (for code 3 and code 4 in figure 1).
**Figure 6** shows the LA-CDMA codes formed by the relative coding pulse compressing method mentioned in the paper.
**Figure 7** shows the LA-CDMA codes formed by the absolute coding pulse compressing method mentioned in the paper.
**Figure 8** shows the time offsetting and overlapping method to raise the code's duty ratio mentioned in the paper.
**Figure 9** shows a diagram of a class of receiver.

### Implement mode of the invention

An explanation of the invention with the attached figures is presented below.

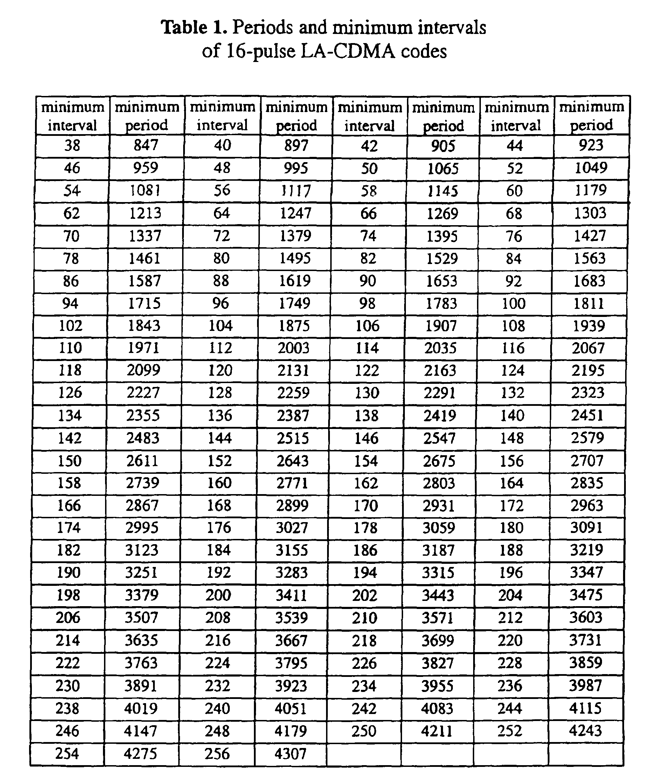

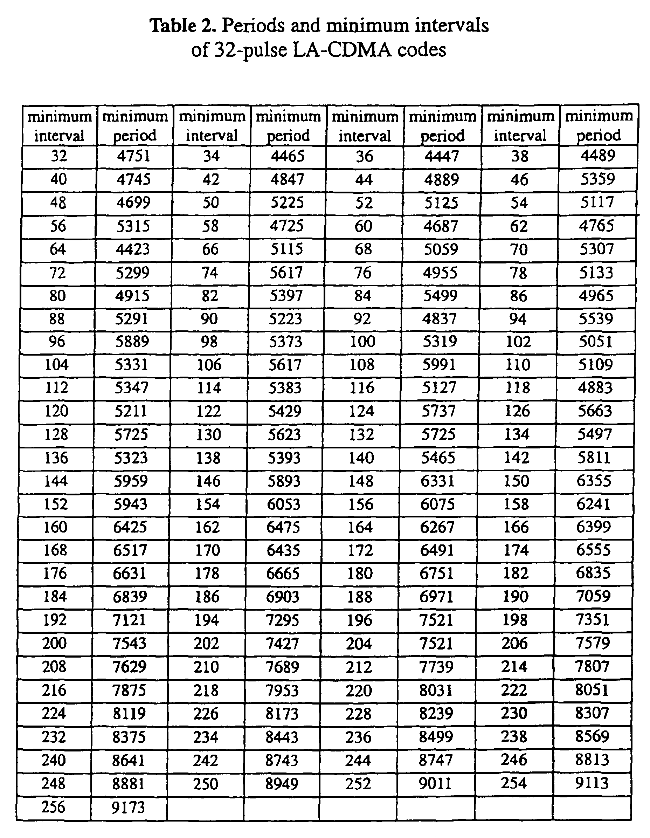

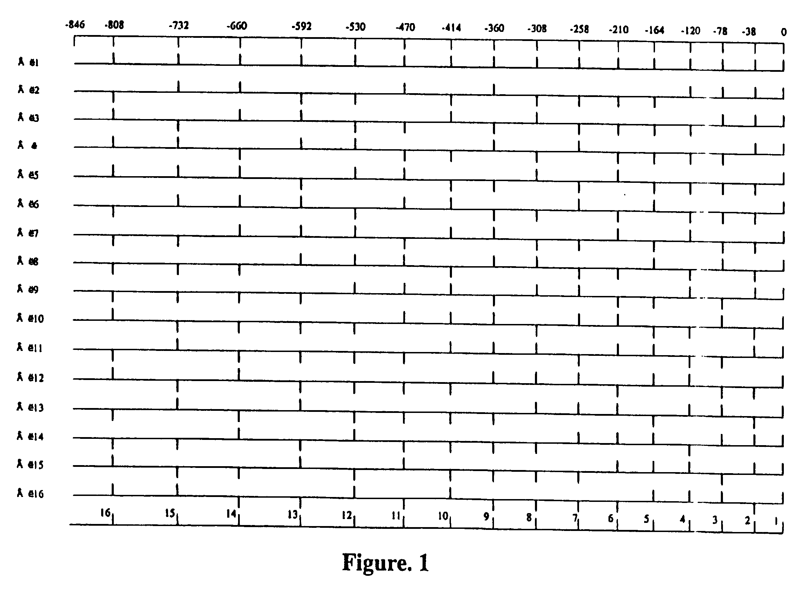

See **Figure.1**. This is a simple LA-CDMA orthogonal code group including 16 access code words that can be used by 16 users simultaneously. Each code word consists of 16 "±1" basic pulses. The period of this code group is 847. The intervals between pulses are respectively: 38, 40, 42, 44, 46, 48, 50, 52, 54, 56, 60, 62, 68, 72, 76 and 39. The polarities of the pulses ensure orthogonality between the codes.

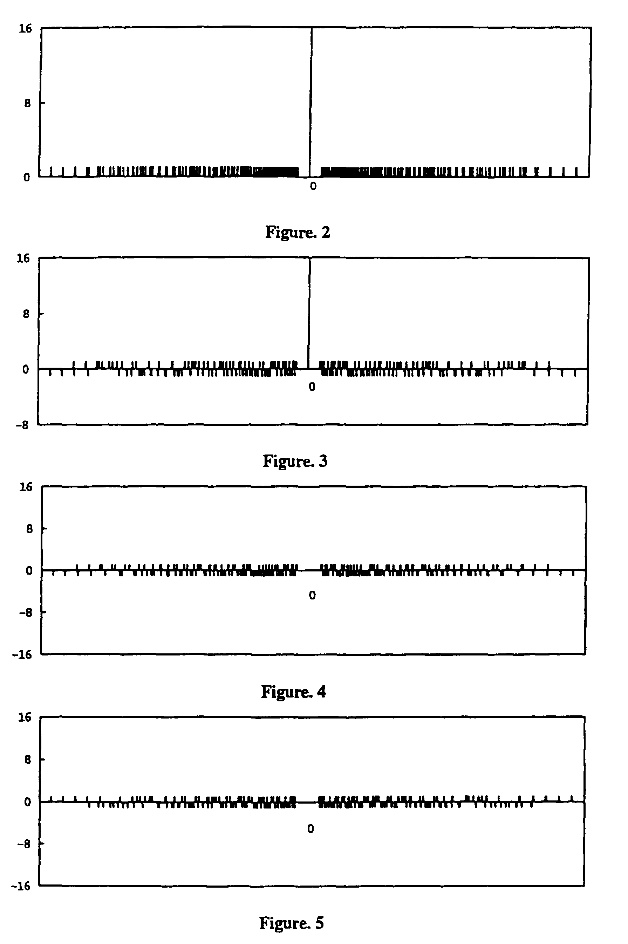

Please see **Figure.2** and **Figure.3**, which are non-cyclic auto-correlation curves for code 1 and code 2 in **Figure.1** respectively. Cross-correlation functions between other pairs of codes have quite similar shapes so that side lobes may equal a value chosen from +1, -1 or 0.

The correlation functions of any other LA-CDMA codes have quite similar shapes, and the only possible difference lies in polarities and positions of side lobes. The features of this code are described as follows:
1) Main lobe value of auto-correlation function equals the number of basic pulses, and also equals the number of orthogonal code words in the code group.
2) There are only three possible values of side lobes in the auto-correlation and cross-correlation function: +1, -1 or 0.
3) A zero correlation window in the auto-correlation and cross-correlation function or around the origin exists, and its magnitude is equal to 1 plus two times of the minimal interval between basic pulses.

So it can be concluded that the LA-CDMA code group that is designed according to this invention can control and minimize the side lobes of the auto-correlation and cross-correlation function. This enables the CDMA system to control and minimize MAI and ISI simultaneously.

Table 1 and table 2 below respectively list minimum periods of LA-CDMA codes of 16 basic pulses and 32 basic pulses under the conditions of various minimal basic pulse intervals, in order to make it convenient for choosing.

Pulse duty ratio for basic the LA-CDMA code is very low. For example, **Figure.1** shows that pulse duty ratio of a 16 basic pulse code with period of 847 is merely 16/847 (= 0.0189). To increase the duty ratio in a practical design, any pulse compression codes with good performance such as a Barker sequence or linear frequency modulation code are usable to substitute for each single pulse in the basic code. In this way, as long as the received signal passes through a matched filter matched to this pulse compression code in advance, the output is the required LA-CDMA code. Several solutions for increasing pulse duty ratio included in this invention are described below:

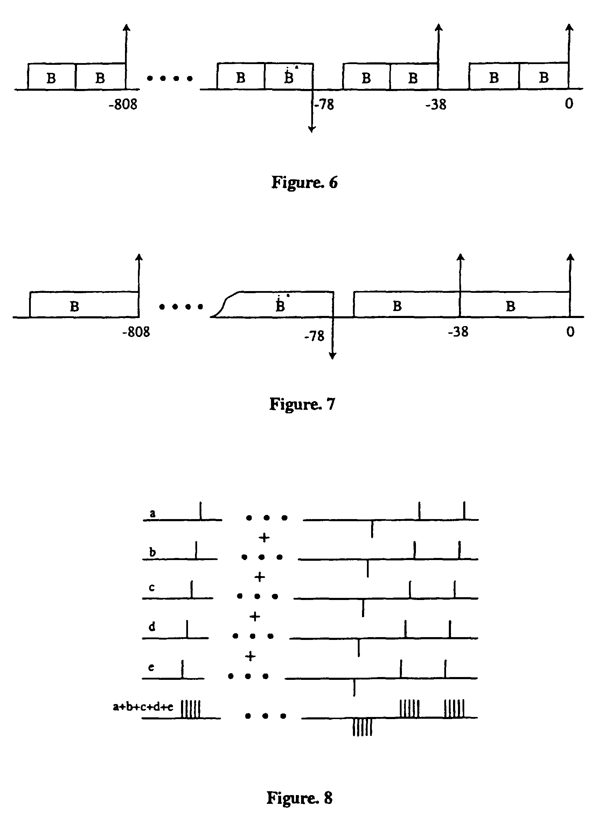

Forming an LA-CDMA code by a relative encoding pulse compression method is shown in **Figure.6**. A positive pulse in the basic LA-CDMA code is generated by two consecutive pulse compression code "B"s with the same polarity, whereas a negative pulse is generated by a positive and a negative pulse compression code "B". For instance, considering a 16-pulse LA-CDMA code with a period of 847, if a 13-bit Barker sequence is chosen for the pulse compression code, then the duty ratio of the code will rise to 16×26/847 (= 0.4911).

Forming an LA-CDMA code by an absolute encoding pulse compression method is shown in **Figure.7**. A positive pulse in the basic LA-CDMA code is generated by a pulse compression code "B", whereas a negative pulse is generated by an inverse (i.e. an inverted polarity "B") of the pulse compression code. For instance, still considering a 16-pulse LA-CDMA code with a period of 847, if a 28-bit pulse compression code is chosen to form a single pulse, then the duty ratio will rise to 16×28/847 (= 0.5289); if a 38-bit pulse compression code is chosen to form a single pulse, then the duty ratio will rise to 16×38/847 (= 0.7178).

Adopting a time-offset overlapped method for increasing the duty ratio is illustrated in **Figure.8**, where "a" is the primitive code, "b", "c", "d" and "e" are shifted code versions after four shifts respectively, and "a+b+c+d+e" is a time-offset overlapped code. It should be noted that the time-offset value must be greater than the time dispersion range of the channel; otherwise, either adding a partial response equalizer to receiver in order to reduce time dispersion range of channel, or adopting various orthogonal frequencies for the time-offset versions smaller than the time dispersion range of the channel, should be employed. When synchronization techniques are adopted, it is similar to a TDMA technique in that different shift versions can be used by different users. Therefore, this can increase the number of orthogonal codes greatly. In a random access system, each shifted version of the LA-CDMA code can only be used by one user, but that method can increase the user's data rate enormously without expanding system bandwidth, or can decrease system bandwidth while retaining a given data rate.

Clearly, the time-offset overlapped pulse compression method can also be employed, which is a mixture of method 1 and method 2, or a mixture of method 2 and method 3, and further details are not needed. This method can furthest increase pulse duty ratio and information rate simultaneously (or decrease system bandwidth with data rate unaffected).

Sometimes it is inconvenient that the maximum number of users offered by the basic LA-CDMA code is determined only by the quantity of basic pulses, since the more orthogonal codes in the code group, the better. This invention will provide three solutions to enlarge the number of users.

The first solution is to adopt orthogonal pulse compression codes. If M pieces of orthogonal pulse compression codes can be found, then M×N orthogonal pulse compression code words can be obtained when there are N pulses in an LA-CDMA code. For example, considering a 16-pulse LA-CDMA code with a period of 847 and choosing a 32-bit orthogonal code as its pulse compression code, as there are 32 orthogonal codes in the 32-bit orthogonal pulse compression code group, there are a total of 16×32 (= 512) orthogonal code words.

The second solution is to adopt orthogonal frequencies. The simplest implementation is to utilize a general purpose FDMA/CDMA mixed technique. In this way, if M kinds of orthogonal frequencies are employed (in which intervals of frequencies are multiples of 1/T, here T is the duration of a pulse in the LA-CDMA code), then M×N orthogonal code words can be obtained when there are N pulses in the LA-CDMA code. Introducing different orthogonal frequencies to different pulses in the LA-CDMA code, especially when the pulse compression method is employed, the finally acquired code is a compound code of the basic LA-CDMA code and the chosen pulse compression code. According to compound encoding theory, the property of a compound code is mainly determined by the code with worse performance of two elements of the compound code. Thus, when a pulse compression code is chosen poorly, the final properties of the auto-correlation and cross-correlation function will worsen. When every pulse is "isolated" by orthogonal frequencies, the pulse compression code will be "isolated" too, minimizing degradation accordingly and increasing room for choices greatly. For instance, still considering a 16-pulse LA-CDMA code with a period of 847, when 16 orthogonal frequencies are introduced and a 32-bit orthogonal code serves as the pulse compression code, a total of 16×16×32 (= 8192) orthogonal code words are obtained.

The third solution is to relax the restriction of orthogonality, i.e. to adopt quasi-orthogonality which uses imperfect orthogonal codes, to increase the number of users. For example, considering an LA-CDMA code with N pulses, as the order of N basic intervals has no affect on its auto-correlation and cross-correlation functions, it can be arbitrary. When a code group with various orders of basic intervals is exploited at the same time, the number of users will increase enormously. This can also serve as a solution for reducing interference of adjacent service areas or channels.

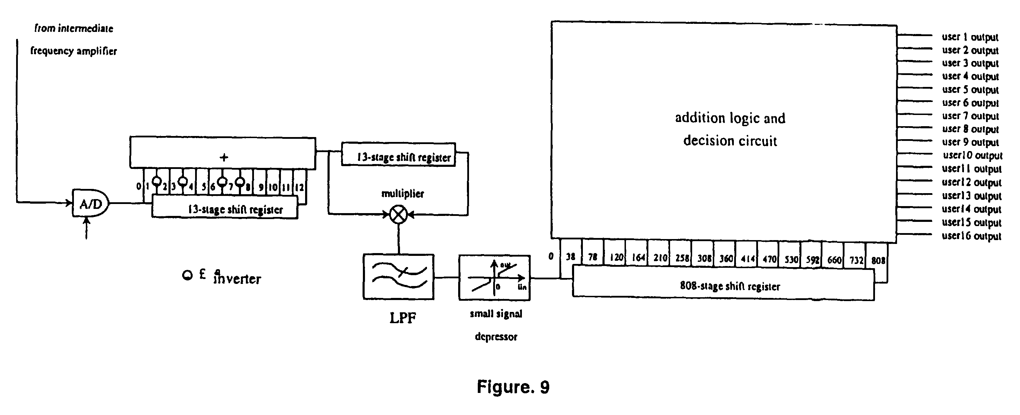

**Figure. 9** is a block diagram of a receiver for a LA-CDMA random access code division multiple access wireless system exploiting this invention. This system adopts 16-pulse LA-CDMA codes and 4 orthogonal frequencies, and can accommodate 64 users to signal simultaneously. The basic structures of a transmitter and a receiver may be readily ascertained once the information basic formula and modulation mode are decided. Of course, detailed implementations may entail some modification according to practical situations. For example, a receiver can be realized either by a matched filter or by a correlator. They both implement correlation operations, and have no distinction essentially. In these cases, a transmitter must generate required modulated waveforms that can be demodulated by computation. Generally, the receiver's structure is comparatively simple, such that a wireless telecommunication engineer can design it in the light of basic modulated signal waveform.

The 16-pulse LA-CDMA code with a period of 847 shown in **Figure.1** is adopted as a multiple access code in this system. Moreover, it utilizes 4 orthogonal frequencies, and each frequency's interval is the reciprocal of the basic pulse's duration. A relative coding pulse compression method is employed to generate the basic LA-CDMA code, with modulation performed using binary phase-shift keying ("BPSK"), and with a pulse compression code of a 13-bit Barker sequence, which is 1 1 1 1 1 -1 -1 1 1 -1 1 -1 1.

Users are permitted to transmit using random access, and to receive by a matched filter. The figure depicts a receiver's block diagram for a certain orthogonal frequency. The operation detects a 13-bit Barker sequence using a pulse shape matched filter that includes a 13-bit digital tap delay line, multipliers, a low pass filter and a weak signal rejector. An 808-bit digital tap delay line and an additional logic circuit, which is another part of the receiver, form a pulse position matched filter

The pulse shape matched filter forms pulses of the basic LA-CDMA code, while the pulse position matched filter implements a match operation on the LA-CDMA code. A pulse position matched filter can implement match operations on 16 orthogonal LA-CDMA code simultaneously.

This invention has completely passed the verification in computer simulation and in simulative experimental sample equipment.

## Claims

1. The feature of the kind of spread spectrum multiple access coding technique lies in that: spread spectrum access code consists of basic pulses that have normalized amplitude and duration of 1 and polarity. The number of basic pulses is ascertained by such practical factors: the requested number of users, the number of usable pulse compression codes, the number of usable orthogonal carrier frequencies, system bandwidth and system maximal information rate. The intervals between these basic pulses on time axis are various, and coding just utilizes the dissimilarity of pulse positions and orders of pulses' polarities.

2. The feature of the kind of spread spectrum multiple access coding technique based on claim 1 lies in that: only one of the intervals between above-mentioned basic pulses on time axis will be an arbitrary odd number greater than minimal interval, that is to say, coding length is odd and the others are all even, and interval between any pair of basic pulses on time axis can't be the sum of any combination of no less than two other intervals.

3. The feature of the spread spectrum multiple access coding technique based on claim 1 or 2 lies in that: mentioned spread spectrum multiple access codes constitute spread spectrum multiple access code group according to orthogonality. Here, the polarities of basic pulses are ascertained by orthogonality of this spread spectrum access code, by Hadamard or other kinds of orthogonal matrix, by some kinds of trans-orthogonal matrix or bi-orthogonal matrix.

4. The feature of the spread spectrum multiple access coding technique based on claim 1 or 2 lies in that: mentioned basic pulse consists of pulse compression codes, which can be derived from one or more binary or multi-nary sequences, from frequency sequences or frequency phase united sequences, from frequency, phase and time united sequences, and so on.

5. The feature of the spread spectrum multiple access coding technique based on right request 1 or 2 lies in that: the obtained spread spectrum access code can also be time-offset and overlapped.

6. The feature of the spread spectrum multiple access coding technique based on claim 5 lies in that: different versions of time-offset spread spectrum multiple access code sequences adopt different orthogonal modulating frequencies.

7. The feature of the spread spectrum multiple access coding technique based on claim 1 or 2 lies in that: mentioned basic pulse consists of orthogonal pulse compression codes, which can be derived from one or more groups of binary or multi-nary sequences, from frequency sequences or frequency phase united sequences, from frequency, phase and time united modulating sequences, and so on.

8. The feature of the spread spectrum multiple access coding technique based on claim 1 or 2 lies in that: mentioned basic pulses adopt different orthogonal modulating frequencies.

9. The feature of the spread spectrum multiple access coding technique based on claim 1 or 2 lies in coding with recomposition of mentioned intervals of basic pulses on time axis.
